# EUROPEAN PATENT SPECIFICATION

(11) **EP 2 577 250 B1**
(45) Date of publication and mention of the grant of the patent: **14.03.2018**
(21) Application number: 11786993.3
(22) Date of filing: 25.05.2011
(51) Int. Cl.: G01M 3/28, F01N 11/00, F01N 3/36, F02M 65/00, F01N 3/025

(54) **METHOD AND SYSTEM PERTAINING TO TESTING OF INJECTION SYSTEMS**
VERFAHREN UND SYSTEM ZUM TESTEN VON EINSPRITZSYSTEMEN
PROCÉDÉ ET SYSTÈME RELATIFS À L'ESSAI DE SYSTÈMES D'INJECTION

(30) Priority: 28.05.2010 SE 1050532
(43) Date of publication of application: 10.04.2013
(73) Proprietor: Scania CV AB, 151 87 Södertälje (SE)
(72) Inventor: BÖKELUND, Björn, S-152 57 Södertälje (SE); BLOM, Ola, S-146 31 Tullinge (SE)
(74) Representative: Scania CV AB
(86) International application number: PCT/SE2011/050649
(87) International publication number: WO 2011/149417

(56) References cited:
- EP-A1- 1 634 637
- WO-A1-2009/081228
- US-A1- 2006 196 170
- US-A1- 2006 196 170
- US-A1- 2008 319 686
- US-A1- 2010 082 224
- US-A1- 2010 082 224
- US-A1- 2010 114 455

## Description

### Field of the invention

The present invention relates to injection systems and in particular to a method for testing of injection systems according to the preamble of claim 1. The invention relates also to a system and a vehicle.

### Background to the invention

Means of transport such as vehicles and craft often employ one or more processes, e.g. exhaust cleaning processes and/or fuel injection processes, in which an injector is used to inject some kind of liquid to the process.

A widespread example is exhaust cleaning processes for cleaning of exhaust flows from combustion engines. Particularly with regard to vehicles, but also various types of craft, emission standards and rules about pollutants and air quality have been adopted in many jurisdictions.

Such emission standards often set requirements which define acceptable limits for exhaust discharges from vehicles and craft equipped with combustion engines.

The endeavour to meet such emission standards often involves post-treatment (cleaning) of the exhaust gases which arise from the engine's combustion.

One way to post-treat exhaust gases from a combustion engine is a so-called catalytic cleaning process, so vehicles and in many cases at least large craft are usually provided with at least one catalyst.

Moreover, the post-treatment system may alternatively, or in combination with one or more catalysts, employ other components, e.g. particle filters. There are also particle filters and catalysts which are mutually integrated.

Post-treatment systems with particle filters often use a fuel, e.g. diesel fuel, for so-called active regeneration whereby the filter is emptied of soot by oxidation. The fuel is injected via a fuel injector into the exhaust flow arising from the engine's combustion.

Catalysts may be of a type in which an additive is supplied via an injector to the exhaust flow arising from the engine's combustion, in order to reduce substances present therein. A commonly used catalyst of this type is SCR (selective catalytic reduction) catalysts. The additive is injected into the exhaust flow upstream of the catalyst.

Such injection systems are often subject to legal requirements concerning self-diagnosis (onboard diagnostics, OBD) of various functions, and also safety requirements, with consequent need for automatic diagnosability of the function of the injector and, for example, valves for supply of fuel/other liquids.

There are currently various ways of effecting such diagnosis. It is for example possible, with the injector closed, to determine a pressure in the injection system, which pressure can be used for diagnosis of the injection system. Depending on its location, however, the injection system may to a greater or lesser extent be exposed to, and warmed by, waste heat from nearby components, e.g. the engine and the exhaust system. This leads to the possibility that the temperature rise may cause liquid confined in the injection system to expand, with consequent pressure increase, which may for example lead to the pressure rising and the diagnosis thus becoming unreliable.

WO 2009/081228 A1 relates to an apparatus for injection of a fluid for an exhaust gases treatment device of an internal combustion engine arrangement, said apparatus including a fluid injector fed from a source of fluid under pressure through a fluid conduit, a feed valve in the fluid conduit between said source of fluid and said injector, and a purge system comprising a gas conduit connecting a source of pressurized gas to the fluid conduit. The purge system further comprises a pressure limiter within said gas conduit, and a check valve downstream of said pressure limiter. The pressure limited by said pressure limiter is lower than the pressure of fluid delivered by the source of fluid.

To sum up, there is thus a need for an improved method, for testing an injection system for injection of a liquid to a process, which overcomes or at least mitigates the disadvantages of existing solutions.

### Summary of the invention

An object of the present invention is to propose a method which solves the above problem. This object is achieved by a method according to the characterising part of claim 1.

The present invention relates to a method for testing an injection system which has an injector for injection of pressurised liquid to a process. Said pressurised liquid may be selectively supplied to said injector via a first valve, and a pressurised gas may be selectively supplied to said injector via a second valve. The method, when said injector is closed, comprises:
- opening said second valve to supply said pressurised gas to said injection system,
- opening said first valve to supply said pressurised liquid,
- closing at least said first valve, and
- determining a first pressure in said injection system.

This affords the advantage that undesirable pressure increases due to thermal expansion of the pressurised liquid during testing of the injection system can be eliminated.

In the state of the art, during testing of such systems the liquid may expand in response to temperature change, as for example in cases where the injection system is situated adjacent/close to a combustion engine and/or an exhaust cleaning system. The present invention makes it possible to avoid such pressure increases by first supplying gas, which is then compressed at the same time as the liquid expands in response to temperature change, thereby counteracting undesirable pressure increases.

The invention affords also the advantage of being able to detect in the injection system small leaks which in the state of the art may be concealed because the undesirable pressure increase cancels out the pressure decrease due to the leakage, which may result in a malfunctioning system being improperly regarded as functioning properly.

Further characteristics of the present invention and advantages thereof are indicated by the detailed description set out below of embodiment examples and the attached drawings.

### Brief description of the drawings

Fig. 1a depicts a power train in a vehicle in which the present invention may with advantage be used.
Fig. 1b depicts an example of a control unit in a vehicle control system.
Fig. 2 depicts an example of a post-treatment system in a vehicle in which the present invention may with advantage be used.
Fig. 3 depicts in more detail an injection system pertaining to the post-treatment system depicted in Fig. 2.
Fig. 4 is a diagram of the pressure variation in the injection system during testing according to the state of the art.
Fig. 5 is a schematic flowchart according to an example of the method according to the present invention.
Fig. 6 is a diagram of pressure changes during a test of an injection system according to an example of an embodiment of the present invention.

### Detailed description of preferred embodiments

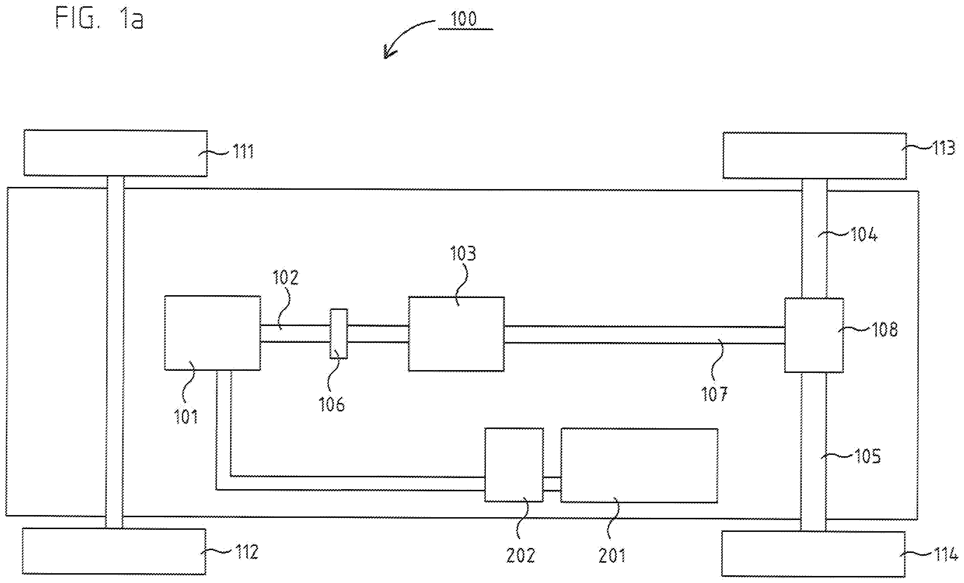

Fig. 1a depicts schematically a heavy vehicle 100, e.g. a truck, bus or the like, according to an example of an embodiment of the present invention. The vehicle 100 schematically depicted in Fig. 1a has a pair of forward wheels 111, 112 and a pair of powered rear wheels 113, 114. The vehicle further comprises a power train with a combustion engine 101 which is connected in a conventional way, via an output shaft 102 of the engine 101, to a gearbox 103, e.g. via a clutch 106.

An output shaft 107 from the gearbox 103 drives the powered wheels 113, 114 via a final gear 108, e.g. a conventional differential, and drive shafts 104, 105 which are connected to said final gear 108.

The vehicle 100 further comprises a post-treatment system to treat exhaust discharges from the engine 101. The post-treatment may be of various types, and in the embodiment example depicted, it incorporates an SCR (selective catalytic reduction) catalyst 201. The post-treatment system further comprises a particle filter 202 situated upstream of the SCR catalyst 201. The particle filter 202 might also be situated downstream of the SCR catalyst 201.

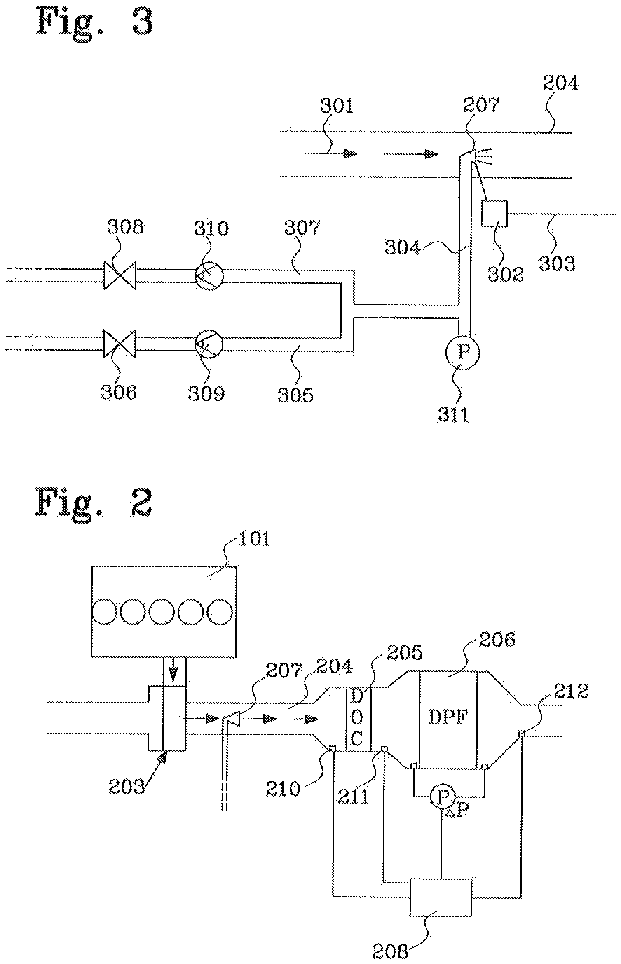

The post-treatment system is depicted in more detail in Fig. 2, in which the exhaust gases generated by combustion in the engine 101 of the vehicle 100 are led via a turbo unit 203 (in turbo engines the exhaust flow arising from the combustion often drives a turbo unit which compresses the incoming air for the combustion in the cylinders). The function of the turbo unit is very well known and is not further described here. The exhaust flow is then led via a pipe 204 (indicated by arrows) to a diesel oxidation catalyst (DOC) 205 and thence to a particle filter 206. The post-treatment system may be of many different types and may for example have a particle filter but no oxidation catalyst.

A particle filter is a device used particularly in diesel engines to separate particles from the exhaust flow. It makes it possible to remove a very large proportion of the particles.

Diesel particles consist of hydrocarbons, carbon and inorganic substances such as sulphur and ash. Progressively as they are separated by the particle filter, the particles also accumulate in the filter, which therefore fills up over time. Depending on such factors as current running conditions, the driver's mode of driving and the vehicle's load, this filter filling may take place more or less quickly, but when it reaches a certain level the filter has to be "emptied". If the filter is filled to too high a level, the performance of the vehicle may be affected and there may also be fire risk.

This emptying is generally called regeneration and the filter has therefore to be regenerated regularly.

Regeneration may for example be effected by the filter being heated to a high temperature at which the particles oxidise to carbon dioxide and water. Regeneration may also be effected by the addition of various chemicals to the vehicle's fuel to lower the oxidation temperature of the particles.

In the case of regeneration by temperature increase, as in the solution depicted in Fig. 2, the temperature increase may be effected by fuel (diesel fuel) being injected into the exhaust flow upstream of the (diesel) oxidation catalyst. This fuel injection involves using an injection system which comprises an injector 207.

Determination of appropriate times for regeneration of the particle filter may for example be done by a control unit 208 which can do so at least partly on the basis of signals from a pressure sensor 209 which measures pressure differences across the particle filter. The fuller the particle filter becomes, the greater the pressure difference will be.

The control unit 208 also controls dosage of suitable amounts of fuel for injection via the injector 207 into the exhaust flow during regeneration. The amount of this fuel may for example depend on how full the filter is and on current temperatures before and after the oxidation catalyst 205 and after the particle filter 206. These temperatures may for example be determined by means of temperature sensors 210-212.

Control systems in modern vehicles generally comprise a communication bus system consisting of one or more communication buses for connecting together a number of electronic control units (ECUs), or controllers, and various components located on the vehicle. Such a control system may comprise a large number of control units, and the responsibility for a specific function may be divided among two or more of them.

For the sake of simplicity, Fig. 2 depicts only the control unit 208, but vehicles of the type depicted often have a relatively large number of control units, e.g. to control the engine, gearbox etc. etc., as is well known to specialists in the technical field.

The present invention may be implemented in the control unit 208 but may also be implemented wholly or partly in one or more other control units with which the vehicle is provided.

Control units of the type depicted are normally arranged to receive sensor signals from various parts of the vehicle, e.g. said pressure sensor 209 and temperature sensors 210-212, and also a pressure sensor 311, the function of which is described below in relation to Fig. 3. The control signals generated by control units normally depend also both on signals from other control units and on signals from components. For example, the control exercised by the control unit 208 over fuel for supply to the exhaust flow may depend on information received from, for example, the engine control unit (e.g. data concerning amounts of fuel injected into the cylinders).

Control units of the type depicted are also usually arranged to deliver control signals to various parts and components of the vehicle, e.g. to means for control of the injector 207.

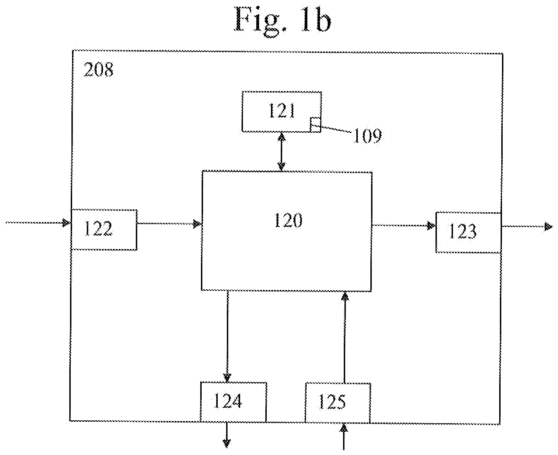

The control is often governed by programmed instructions. These programmed instructions take typically the form of a computer programme which, when executed in a computer or control unit, causes the computer/control unit to effect desired forms of control action, e.g. method steps according to the present invention. The computer programme usually takes the form of a computer programme product 109 which is stored on a digital storage medium 121 (see Fig. 1b), e.g. ROM (read-only memory), PROM (programmable read-only memory), EPROM (erasable PROM), flash memory, EEPROM (electrically erasable PROM), a hard disc unit etc., in communication with or in the control unit, and which is executed by the control unit. The vehicle's behaviour in a specific situation can thus be adapted by altering the computer programme's instructions.

An example of a control unit (the control unit 208) is depicted schematically in Fig. 1b, which control unit 208 may in its turn comprise a calculation unit 120 which may take the form of substantially any suitable type of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121 which provides it with, for example, the stored programme code 109 and/or the stored data which the calculation unit 120 needs in order to be able to perform calculations. The calculation unit 120 is also arranged to store partial or final results of calculations in the memory unit 121.

The control unit 208 is further provided with respective devices 122, 123, 124, 125 for receiving and sending input and output signals. These input and output signals may comprise waveforms, pulses or other attributes which the input signal receiving devices 122, 125 can detect as information and which can be converted to signals processable by the calculation unit 120. These signals are then conveyed to the calculation unit 120. The output signal sending devices 123, 124 are arranged to convert signals received from the calculation unit 120 in order, e.g. by modulating them, to create output signals which can be conveyed to other parts of the vehicle's control system and/or the component/components for which the signals are intended. Each of the connections to the respective devices for receiving and sending input and output signals may take the form of one or more from among a cable, a data bus, e.g. a CAN (Controller Area Network) bus, a MOST (Media Orientated Systems Transport) bus or some other bus configuration, or a wireless connection.

It is very important that the injection system for injection of fuel during the regeneration process should function properly so that amounts of fuel injected are actually those intended. If too large amounts of fuel are injected or if the injection system leaks, with the result that fuel is continually supplied unintentionally, there is risk of fire in the post-treatment system, with possibly very serious consequences.

It is therefore necessary to ensure that the injection system functions properly. Fig. 3 depicts the injection system of Fig. 2 in more detail.

The injector 207 is situated in, or in communication with, the pipe 204 through which the exhaust flow 301 is led. Opening and closing of the injector is effected by an actuator 302 which receives control signals 303 from the control unit 208. Fuel for supply to the exhaust flow 201 via the injector 207 is supplied via a pipe 304. Fuel is supplied to the pipe 304 via a pipe 305 which may for example be connected to the fuel system (usually a low-pressure system in which the fuel is pressurised to a pressure of the order of 10 bar) which provides fuel for injection in the engine. Alternatively, the fuel supply may be provided by a separate system. The fuel supply can be selectively shut off by means of a fuel valve 306.

In addition to being supplied with fuel, the injector 207 may also be supplied with a pressurised gas which in this example is, but need not necessarily be, pressurised air. The compressed air is supplied via a pipe 307 which may for example form part of a compressed air system fitted in the vehicle. The supply of compressed air can be selectively controlled by means of an air valve 308.

The valves 306, 308 may be situated at any suitable location, e.g. on the engine block. Check valves 309, 310 may also be used to prevent undesirable flow of fuel in the compressed air system and/or undesirable flow of compressed air in the fuel system.

The compressed air is used primarily to flush/blow the injector 207 clean of fuel residues after the fuel injection has taken place. If for example drops of fuel remain on the injector 207 after injection, the fuel residues may be converted/burnt to coke by the warm exhaust flow passing through, possibly leading over time to malfunctions due to undesirable deposits.

As above, it has to be possible to verify the function of the injection system, i.e. that the valves 306, 308 and the injector 207 are functioning properly. This diagnosis is done at least partly by means of a pressure sensor 311, e.g. an absolute pressure sensor or a relative pressure sensor, situated between the injector 207 and the two valves 306, 308.

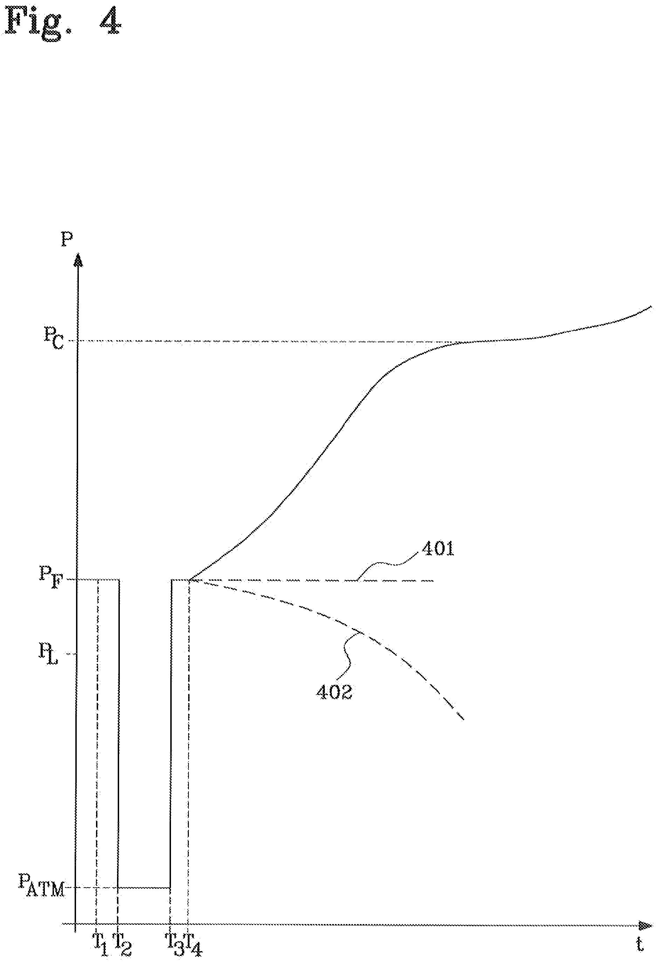

According to prior art, the function of the injection system can be tested by determining the pressure in the injection system and thereby detecting any leakage. For example, undesirable leakage may occur on the injector 207, the fuel valve 306, the air valve 308 and the pipes 304, 305, 307. Prior art testing is illustrated in Fig. 4 and involves the valves 306, 308 being closed at time T1, followed by the injector 207 being opened at time T2 and thereafter closed. The injector may for example be kept open for a specific time before it is closed, in order thereafter to be kept closed during the test. After the closing of the injector, the pressure in the post-treatment system will correspond substantially to atmospheric pressure (the pressure in the exhaust pipe 204). Thereafter the fuel valve 306 is opened at time T3 so that the pipes between the valves 306, 308 and the injector 207 are filled with fuel, followed by the fuel valve being closed at time T4. When the fuel valve 306 is opened, the pressure rises to the fuel system's pressure P_{F}, which may be of the order of 8-12 bar, but also higher or lower, depending on what is found to be appropriate.

If the fuel valve and the injector function properly, the pressure in the pipe between them will be constant and remain the same as in the fuel system, i.e. P_{F}, which is determined by means of the pressure sensor 311. This desirable pattern is illustrated by a broken line 401 in Fig. 4. Alternatively, leakage may occur, in which case the pressure may decrease according to the broken line 402 and a signal which represents leakage may be generated if the pressure drops below a level P_{L} within a certain time.

This solution does however have a substantial disadvantage. Injection systems of the type depicted in Fig. 2 often have one or more components situated in warm surroundings. For example, pipes, valves and the like may be warmed by waste heat, e.g. from the engine and the exhaust system. This may cause diesel fuel confined in the pipes 304, 305, 307 to expand owing to the temperature increase, possibly causing the pressure in the injection system to rise very quickly to a high level. This is illustrated by an unbroken line in Fig. 4 showing how the pressure may for example rise to double the pressure of the fuel system. This renders diagnosis unreliable. For example, leakage may be more difficult to detect because of the pressure increase. The pressure may also rise to a critical level Pc at which damage to the pressure sensor and other parts may occur, e.g. pipes may crack.

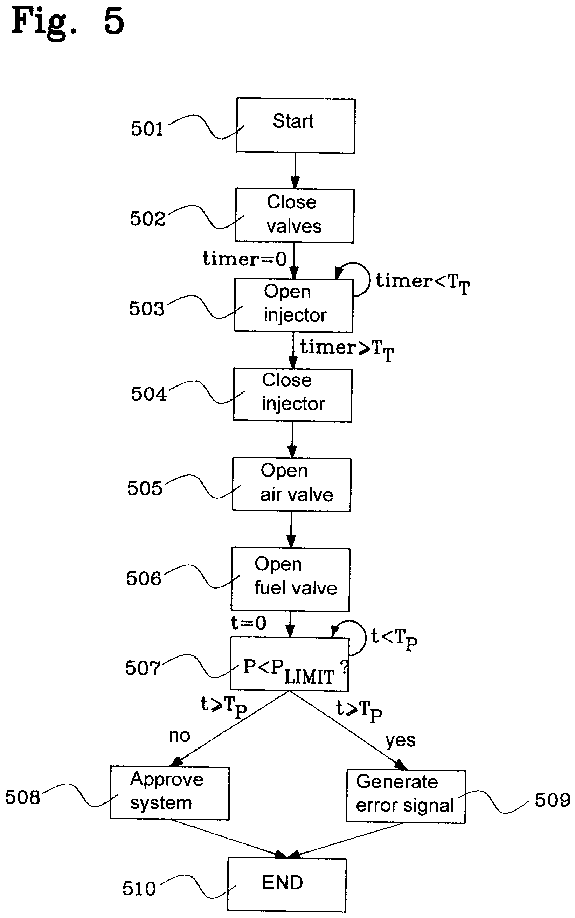

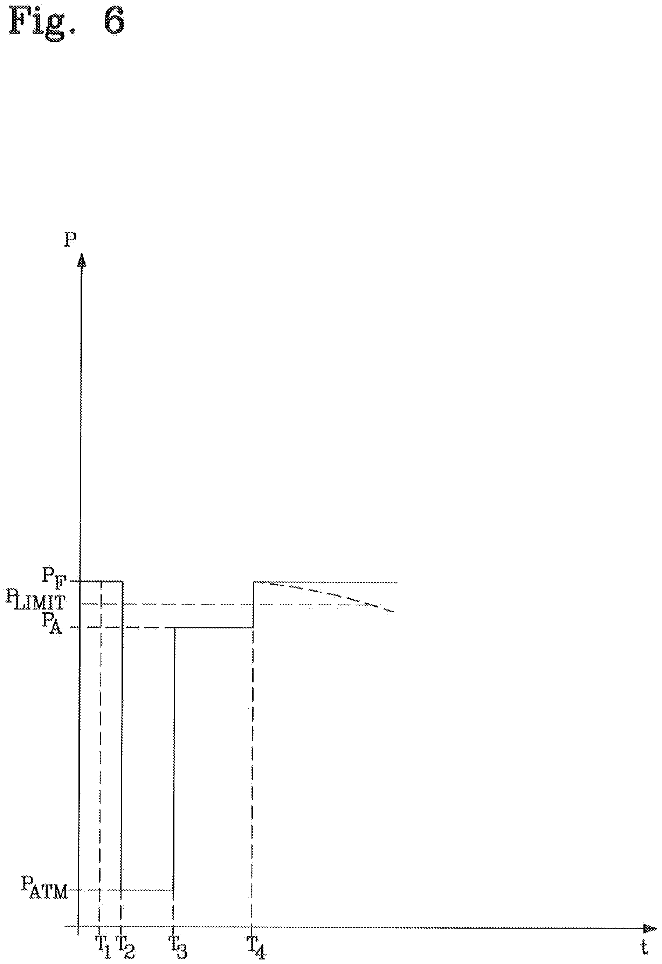

According to the present invention, this problem is solved by an alternative method for testing the injection system. Fig. 5 is a flowchart of a method example 500 according to the present invention, and Fig. 6 a diagram of the variation in pressure in the injection system during testing. The system is the same, but the test method differs substantially from the state of the art.

After starting at step 501, the method moves on to step 502 in which, precisely as above, it closes the valves 306, 308 at time T1 in Fig. 6, followed by opening of the injector 207 as step 503 at time T2. As before, the injector may be kept open for a time before it is closed, which in the present example is done by using a timer to effect closure after a time T_{T} has passed, step 504. The pressure in the injection system will thus correspond substantially to atmospheric pressure (the pressure in the exhaust pipe 204). Thereafter, at time T3, instead of the fuel valve 306, the air valve 308 is opened so that the pipes between the valves 306, 308 and the injector 207 become filled with compressed air. The pressure rises to the compressed air system's pressure P_{A}, which may for example be of the order of 6-10 bar but may also be higher or lower. At this stage, a first test may, but need not be, carried out, in which case the air valve 308 is closed and any leakage can be detected by means of the pressure sensor 311. In the present example, however, the fuel valve 306 is opened at time T4 without testing having been done, so the pressure in the injection system rises to the fuel system's pressure P_{F}.

In this embodiment there is no need to close the air valve 308 before testing, since the check valve 310 prevents fuel from reaching the compressed air system. As the compressed air system's pressure is lower than the fuel system's pressure, the compressed air pressure will likewise not affect the test. In an alternative embodiment, e.g. with no check valve 310, the air valve 308 may be closed before the fuel valve 306 is opened.

First filling the system with compressed air which is kept in the pipe by the injector being kept closed makes it possible to use the air's compressibility to reduce pressure increases caused by the fuel expanding with increased temperature as above.

The pressure remains the same when fuel and air are mixed as when the pipe is filled with fuel only. If the fuel/air mixture in the pipes 304, 305, 307 is thereafter warmed by high ambient temperature, the air will be compressed when the fuel expands, with the result that the pressure increase may be considerably reduced. The present invention thus markedly reduces the undesirable pressure increase, thereby improving diagnostic reliability. The pressure sensor and other parts are also protected from excessive pressure, thereby obviating, or at least reducing, for example, the need for overpressure valves and the like.

If the fuel valve and the injector function properly, the pressure in the pipe between them will thus be constant and remain the same as in the fuel system, i.e. P_{F}, which is determined as above by means of the pressure sensor 311 at step 507. If the pressure does not drop below a specific pressure, e.g. a level P_{LIMIT} (P_{LIMIT} < P_{F}), within a certain time Tp, the method moves on to step 508, in which the system is approved, after which the method ends at step 510. If on the contrary the pressure drops (broken line in Fig. 6) to below the level P_{LIMIT} within the time TP, the method moves on to step 509, in which an error signal is generated and may for example be conveyed to another suitable control unit in the vehicle's control system for further processing. The method then ends at step 510.

Step 507 thus comprises determining a first pressure in said injection system, in the pipe between the fuel valve and the injector. It further comprises comparing said first pressure with a second pressure P_{F} and determining that said injection system is malfunctioning if said first pressure drops below the level P_{LIMIT} within the time T_{P}, i.e. deviates from said second pressure by more than the first pressure difference (P_{F} - P_{LIMIT}). The method then moves on to step 509. If on the contrary said first pressure does not drop below a specific pressure, e.g. the level P_{LIMIT}, within a certain time Tp, i.e. if said first pressure deviates from said second pressure by less than the first pressure difference, it is determined that said injection system is functioning properly. The method then moves on to step 508.

The time T_{P} may for example be any desired number of seconds, e.g. within the range 1-600, 5-600 or 10-600 seconds. Longer periods of time, e.g. two minutes or more, make it possible to detect even very small leaks. The pressure level P_{LIMIT} may also for example be the fuel system's pressure minus an appropriate pressure difference, e.g. 0.5 or 1 bar or some other suitable difference. As the present invention makes it possible to reduce undesirable pressure increases, even small leaks such as may be concealed in the state of the art by the undesirable pressure increase can be detected.

The working pressure of the compressed air system is normally lower than the fuel system's working pressure, with the result that the pressure rises when the fuel valve is opened. The relationship may however also be the reverse. In cases where the compressed air system's pressure is higher than that of the fuel system, it is necessary, before the fuel valve is opened, for the air valve to be closed and the pressure lowered, e.g. via the injector, to a pressure which does not exceed, but preferably substantially corresponds to, the fuel system's pressure.

The present invention is described above in relation to a fuel injection system for injecting fuel to an exhaust cleaning process. The invention is also applicable, however, in other injection systems, e.g. fuel injection systems for injecting fuel for a combustion process.

The invention is also applicable in injection systems for injecting other types of liquids than fuel. For example, another commonly used way of post-treating exhaust gases from a combustion engine is by a catalytic cleaning process in which an additive is supplied to the exhaust flow arising from the engine's combustion.

An example of additive supply to the exhaust flow arising from the engine's combustion in which the present invention is applicable is so-called HC-LNC (Lean NOx Catalyst) catalysts whereby some form of hydrocarbon (fuel) is added to the exhaust flow upstream of the LNC catalyst.

A widely used type of catalyst is SCR (selective catalyst reduction) catalysts. These use ammonia (NH₃), or a compound from which ammonia can be generated/formed, as additive for reducing the amount of nitrogen oxides NOₓ. The additive for this purpose is often urea-based and may for example take the form of AdBlue. This additive is injected into the exhaust flow arising from the engine, upstream of the SCR catalyst, and may for example be injected via an injection system of the type to which the present invention relates.

The present invention may thus also be used in testing of injection systems for injection of other types of liquids than fuel.

The invention is generally applicable in testing all types of injection systems in which a liquid is supplied to a process.

Moreover, the present invention is exemplified above in relation to vehicles, but the invention is also applicable in any craft in which injection systems as above are applicable, e.g. watercraft or aircraft with combustion processes and/or exhaust cleaning processes as above.

## Claims

1. A method for testing an injection system, where said injection system comprises an injector (207) for injection of pressurised liquid to a process, said pressurised liquid can be selectively supplied to said injector (207) via a first valve (306), a pressurised gas can be selectively supplied to said injector (207) via a second valve (308), and said method comprises, when said injector (207) is closed:
- opening said second valve (308) to supply said pressurised gas to said injection system,
- opening said first valve (306) to supply said pressurised liquid,
- closing at least said first valve (306),
- determining a first pressure in said injection system,
- determining whether said first pressure fulfils a first criterion and, on the basis of said determination, determining whether said injection system is functioning properly or is malfunctioning.

2. A method according to claim 1, which method further comprises comparing said first pressure with a second pressure and determining that said injection system is malfunctioning when said first pressure deviates from said second pressure by more than a first pressure difference.

3. A method according to claim 1 or 2, which method further comprises comparing said first pressure with a second pressure and determining that said injection system is functioning properly when said first pressure deviates from said second pressure by less than a first pressure difference.

4. A method according to claim 2 or 3, in which said determination is done when a first amount of time has passed.

5. A method according to any one of claims 1-4, which method further comprises closing said second valve (308) before determination of said first pressure.

6. A method according to any one of claims 1-5, which method further comprises, before said opening of said second valve (308):
- opening and closing said injector (207).

7. A method according to any one of claims 1-6, in which said first valve (306) is kept open for a second amount of time before said first valve (306) is closed.

8. A method according to any one of claims 1-7, in which said process takes the form of an exhaust cleaning process and said liquid is injected to said exhaust cleaning process.

9. A method according to any one of the foregoing claims, in which said liquid takes the form of a fuel.

10. A method according to any one of the foregoing claims, in which said liquid takes the form of a fuel and said fuel is injected into an exhaust flow (301) for use in regeneration of a particle filter (206).

11. A method according to any one of the foregoing claims, in which said process takes the form of an exhaust cleaning process and/or a combustion process.

12. A computer programme which comprises programme code and which, when said programme code is executed in a computer, causes said computer to apply the method according to any of claims 1-11.

13. A computer programme product comprising a computer-readable medium and a computer programme according to claim 12, which computer programme is contained in said computer-readable medium.

14. A system for testing an injection system, where said injection system comprises an injector (207) for injection of pressurised liquid to a process, said pressurised liquid can be selectively supplied to said injector (207) via a first valve (306), a pressurised gas can be selectively supplied to said injector (207) via a second valve (308), and said system comprises means configured to, when said injector (207) is closed:
- opening said second valve (308) to supply said pressurised gas to said injection system,
- opening said first valve (306) to supply said pressurised liquid,
- closing at least said first valve (306),
- determining a first pressure in said injection system,
- determining whether said first pressure fulfils a first criterion and, on the basis of said determination, determining whether said injection system is functioning properly or is malfunctioning.

15. A vehicle (100) **characterised in that** it comprises a system according to claim 14.

## Patentansprüche

1. Verfahren zum Testen eines Einspritzsystems, wobei das Einspritzsystem umfasst: eine Einspritzeinrichtung (207) zum Einspritzen einer unter Druck stehenden Flüssigkeit zu einem Prozess, wobei die unter Druck stehende Flüssigkeit der Einspritzeinrichtung (207) über ein erstes Ventil (306) wahlweise zugeführt werden kann, wobei ein unter Druck stehendes Gas der Einspritzeinrichtung (207) über ein zweites Ventil (308) wahlweise zugeführt werden kann, und wobei das Verfahren, wenn die Einspritzeinrichtung (207) geschlossen ist, umfasst:
- Öffnen des zweiten Ventils (308), um das unter Druck stehende Gas dem Einspritzsystem zuzuführen,
- Öffnen des ersten Ventils (306), um die unter Druck stehende Flüssigkeit zuzuführen,
- Schließen wenigstens des ersten Ventils (306),
- Ermitteln eines ersten Drucks in dem Einspritzsystem,
- Ermitteln, ob der erste Druck ein erstes Kriterium erfüllt, und auf der Basis dieses Ermittelns ermitteln, ob das Einspritzsystem ordnungsgemäß funktioniert oder eine Fehlfunktion hat.

2. Verfahren nach Anspruch 1, wobei das Verfahren ferner umfasst: Vergleichen des ersten Drucks mit einem zweiten Druck und Ermitteln, dass das Einspritzsystem eine Fehlfunktion hat, wenn der erste Druck von dem zweiten Druck um mehr als eine erste Druckdifferenz abweicht.

3. Verfahren nach Anspruch 1 oder 2, wobei das Verfahren ferner umfasst: Vergleichen des ersten Drucks mit einem zweiten Druck und Ermitteln, dass das Einspritzsystem ordnungsgemäß funktioniert, wenn der erste Druck von dem zweiten Druck um weniger als eine erste Druckdifferenz abweicht.

4. Verfahren nach Anspruch 2 oder 3, bei welchem das Ermitteln erfolgt, wenn eine erste Zeitspanne verstrichen ist.

5. Verfahren nach einem der Ansprüche 1 bis 4, wobei das Verfahren ferner umfasst: Schließen des zweiten Ventils (308) vor Ermitteln des ersten Drucks.

6. Verfahren nach einem der Ansprüche 1 bis 5, wobei das Verfahren ferner umfasst: vor dem Öffnen des zweiten Ventils (308):
- Öffnen und Schließen der Einspritzeinrichtung (207).

7. Verfahren nach einem der Ansprüche 1 bis 6, bei welchem das erste Ventil (306) für eine zweite Zeitspanne geöffnet gehalten wird, bevor das erste Ventil (306) geschlossen wird.

8. Verfahren nach einem der Ansprüche 1 bis 7, bei welchem der Prozess die Gestalt eines Abgasreinigungsprozesses hat, und bei welchem die Flüssigkeit zu dem Abgasreinigungsprozess eingespritzt wird.

9. Verfahren nach einem der vorhergehenden Ansprüche, bei welchem die Flüssigkeit die Gestalt eines Kraftstoffs hat.

10. Verfahren nach einem der vorhergehenden Ansprüche, bei welchem die Flüssigkeit die Gestalt eines Kraftstoffs hat, und bei welchem die Flüssigkeit in einen Abgasfluss (301) zur Verwendung bei einer Regeneration eines Partikelfilters (206) eingespritzt wird.

11. Verfahren nach einem der vorhergehenden Ansprüche, bei welchem der Prozess die Gestalt eines Abgasreinigungsprozesses und/oder eines Verbrennungsprozesses hat.

12. Computerprogramm, welches Programmcode umfasst, und welches, wenn der Programmcode in einem Computer ausgeführt wird, den Computer dazu veranlasst, das Verfahren gemäß einem der Ansprüche 1 bis 11 anzuwenden.

13. Computerprogrammprodukt, umfassend ein computerlesbares Medium und ein Computerprogramm nach Anspruch 12, wobei das Computerprogramm in dem computerlesbaren Medium enthalten ist.

14. System zum Testen eines Einspritzsystems, wobei das Einspritzsystem umfasst: eine Einspritzeinrichtung (207) zum Einspritzen einer unter Druck stehenden Flüssigkeit zu einem Prozess, wobei die unter Druck stehende Flüssigkeit der Einspritzeinrichtung (207) über ein erstes Ventil (306) wahlweise zugeführt werden kann, wobei ein unter Druck stehendes Gas der Einspritzeinrichtung (207) über ein zweites Ventil (308) wahlweise zugeführt werden kann, und wobei das System Mittel umfasst, die dazu eingerichtet sind, wenn die Einspritzeinrichtung (207) geschlossen ist:
- des zweite Ventil (308) zu öffnen, um das unter Druck stehende Gas dem Einspritzsystem zuzuführen,
- das erste Ventil (306) zu öffnen, um die unter Druck stehende Flüssigkeit zuzuführen,
- wenigstens das erste Ventil (306) zu schließen,
- einen ersten Druck in dem Einspritzsystem zu ermitteln,
- zu ermitteln, ob der erste Druck ein erstes Kriterium erfüllt, und auf der Basis dieses Ermittelns zu ermitteln, ob das Einspritzsystem ordnungsgemäß funktioniert oder eine Fehlfunktion hat.

15. Fahrzeug (100), **dadurch gekennzeichnet, dass** es ein System nach Anspruch 14 umfasst.

## Revendications

1. Procédé pour tester un système d'injection, où ledit système d'injection comprend un injecteur (207) pour l'injection de liquide sous pression dans un processus, ledit liquide sous pression peut être délivré de façon sélective audit injecteur (207) par l'intermédiaire d'une première vanne (306), un gaz comprimé peut être délivré de façon sélective audit injecteur (207) par l'intermédiaire d'une deuxième vanne (308), et ledit procédé comprenant, lorsque ledit injecteur (207) est fermé :
- l'ouverture de ladite deuxième vanne (308) de façon à délivrer ledit gaz comprimé audit système d'injection,
- l'ouverture de ladite première vanne (306) de façon à délivrer ledit liquide sous pression,
- la fermeture d'au moins ladite première vanne (306),
- la détermination d'une première pression dans ledit système d'injection,
- la détermination du fait que ladite première pression satisfait ou non à un premier critère, et, en fonction de ladite détermination, la détermination du fait que ledit système d'injection fonctionne correctement ou fonctionne mal.

2. Procédé selon la revendication 1, ce procédé comprenant de plus la comparaison de ladite première pression à une deuxième pression et la détermination du fait que ledit système d'injection fonctionne mal lorsque ladite première pression s'écarte de ladite deuxième pression de plus d'une première différence de pression.

3. Procédé selon la revendication 1 ou 2, ce procédé comprenant de plus la comparaison de ladite première pression à une deuxième pression et la détermination du fait que ledit système d'injection fonctionne correctement lorsque ladite première pression s'écarte de ladite deuxième pression de moins d'une première différence de pression.

4. Procédé selon la revendication 2 ou 3, dans lequel ladite détermination est effectuée lorsqu'une première quantité de temps s'est écoulée.

5. Procédé selon l'une quelconque des revendications 1 à 4, ce procédé comprenant de plus la fermeture de ladite deuxième vanne (308) avant la détermination de ladite première pression.

6. Procédé selon l'une quelconque des revendications 1 à 5, ce procédé comprenant de plus, avant ladite ouverture de ladite deuxième vanne (308) :
- l'ouverture et la fermeture dudit injecteur (207).

7. Procédé selon l'une quelconque des revendications 1 à 6, dans lequel ladite première vanne (306) est maintenue ouverte pendant une deuxième quantité de temps avant que ladite première vanne (306) ne soit fermée.

8. Procédé selon l'une quelconque des revendications 1 à 7, dans lequel ledit processus prend la forme d'un processus d'épuration d'échappement et ledit liquide est injecté dans ledit processus d'épuration d'échappement.

9. Procédé selon l'une quelconque des revendications précédentes, dans lequel ledit liquide prend la forme d'un carburant.

10. Procédé selon l'une quelconque des revendications précédentes, dans lequel ledit liquide prend la forme d'un carburant et ledit carburant est injecté dans un écoulement d'échappement (301) pour utilisation à la régénération d'un filtre à particules (206).

11. Procédé selon l'une quelconque des revendications précédentes, dans lequel ledit processus prend la forme d'un processus d'épuration d'échappement et/ou d'un processus de combustion.

12. Programme informatique qui comprend un code de programme et qui, lorsque ledit code de programme est exécuté dans un ordinateur, provoque l'application par ledit ordinateur du procédé selon l'une quelconque des revendications 1 à 11.

13. Produit de programme informatique comprenant un support lisible par ordinateur et un programme informatique selon la revendication 12, ce programme informatique étant contenu dans ledit support lisible par ordinateur.

14. Système pour tester un système d'injection, où ledit système d'injection comprend un injecteur (207) pour l'injection de liquide sous pression dans un processus, ledit liquide sous pression peut être délivré de façon sélective audit injecteur (207) par l'intermédiaire d'une première vanne (306), un gaz comprimé peut être délivré de façon sélective audit injecteur (207) par l'intermédiaire d'une deuxième vanne (308), et ledit système comprend des moyens configurés, lorsque ledit injecteur (207) est fermé, de façon à :
- ouvrir ladite deuxième vanne (308) de façon à délivrer ledit gaz comprimé audit système d'injection,
- ouvrir ladite première vanne (306) de façon à délivrer ledit liquide sous pression,
- fermer au moins ladite première vanne (306),
- déterminer une première pression dans ledit système d'injection,
- déterminer si ladite première pression satisfait ou non à un premier critère, et, en fonction de ladite détermination, déterminer si ledit système d'injection fonctionne correctement ou fonctionne mal.

15. Véhicule (100), **caractérisé en ce qu'**il comprend un système selon la revendication 14.
